# FASCICULE DE BREVET EUROPEEN

(11) **EP 3 426 763 B1**
(45) Date de publication et mention de la délivrance du brevet: **22.04.2020**
(21) Numéro de dépôt: 16757302.1
(22) Date de dépôt: 22.07.2016
(51) Int. Cl.: C12G 1/00, C12H 1/22, E04H 7/00

(54) **CUVIER ET BÂTIMENT COMPRENANT UN TEL CUVIER**
GÄRKELLER UND GEBÄUDE MIT EINEM DERARTIGEN GÄRKELLER
FERMENTATION CELLAR, AND BUILDING COMPRISING A FERMENTATION CELLAR OF SAID TYPE

(30) Priorité: 07.03.2016 FR 1651894
(43) Date de publication de la demande: 16.01.2019
(73) Titulaire: Ingevin, 31340 Vacquiers (FR)
(72) Inventeur: TOURNIER, Roland, 31340 Vacquiers (FR); ARNAUD, François, 34270 Saint-Jean-de-Cuculles (FR)
(74) Mandataire: Plasseraud IP
(86) Numéro de dépôt international: PCT/FR2016/051927
(87) Numéro de publication internationale: WO 2017/153641

(56) Documents cités:
- WO-A2-2006/079987
- FR-A1- 2 944 043
- Anonyme: "Une signature contemporaine dans les vignes", Patrimoine et inventaire d'Aquitaine - Bâtir pour le vin en Aquitaine , XP002763478, Extrait de l'Internet: URL:http://inventaire.aquitaine.fr/batir-v in/signature.htm [extrait le 2016-10-26]
- "Chateau Pichon-Longueville", Vin et vigne - Guide des vins et vignes de France , 18 avril 2015 (2015-04-18), 18 avril 2015 (2015-04-18), XP002763479, Extrait de l'Internet: URL:https://web.archive.org/web/2015041808 4913/http://www.vin-vigne.com/vin-champagn e/chateau-pichon-longueville.html [extrait le 2016-10-25]
- Per Karlsson: BKWinePhotography , XP002763480, Extrait de l'Internet: URL:http://bkwinephotography.photoshelter. com/image?_bqG=27&_bqH=eJwryfU0NY6vNK_MLDT 3CSwPq6zIyk41KtZ1Ngy0MrK0MjQwAGEg6RnvEuxsm 5xZlFyak1ikXZ6Zl1pUqQYWjXf0c7EtAbJDg12D4j1 dbENBOoK9ggoi0sJdvSyK1eIdnUNsi1MTi5IzAPEaI 54- [extrait le 2016-10-26]
- Anonyme: "The famous circular cellar at Louis Jadot in Beaune, Burgundy", , 30 novembre 2011 (2011-11-30), 26 octobre 2016 (2016-10-26), XP002763481, Extrait de l'Internet: URL:http://wine-pictures.blogspot.nl/2011/ 11/famous-circular-cellar-at-louis-jadot.h tml [extrait le 2016-10-26]
- Per Karlsson: "BKWine Photography", , 30 novembre 2011 (2011-11-30), XP002763482, Extrait de l'Internet: URL:http://bkwinephotography.photoshelter. com/image?_bqG=23&_bqH=eJwryfU0NY6vNK_MLDT 3CSwPq6zIyk41KtZ1Ngy0MrK0MjQwAGEg6RnvEuxsm 5xZlFyak1ikXZ6Zl1pUqQYWjXf0c7EtAbJDg12D4j1 dbENBOoK9ggoi0sJdvSyK1eIdnUNsi1MTi5IzAPEaI 54- [extrait le 2016-10-26]
- Per Karlsson: BKWine Photography , 30 novembre 2011 (2011-11-30), XP002763484, Extrait de l'Internet: URL:http://bkwinephotography.photoshelter. com/image?_bqG=24&_bqH=eJwryfU0NY6vNK_MLDT 3CSwPq6zIyk41KtZ1Ngy0MrK0MjQwAGEg6RnvEuxsm 5xZlFyak1ikXZ6Zl1pUqQYWjXf0c7EtAbJDg12D4j1 dbENBOoK9ggoi0sJdvSyK1eIdnUNsi1MTi5IzAPEaI 54- [extrait le 2016-10-26]

## Description

La présente invention concerne un cuvier et un bâtiment comprenant un tel cuvier.

Le domaine de la présente invention est le domaine à la fois du bâtiment et de l'agriculture, plus particulièrement de la viticulture.

Un cuvier, parfois appelé aussi cuverie, est un local dans lequel sont rangées des cuves utilisées pour la fabrication de vin. Dans un tel local, les cuves dans lesquelles se trouve du vin à ses différentes étapes de maturation (depuis le jus de raisin fraichement pressé jusqu'au vin prêt à être vendu) occupent une grande partie de l'espace disponible. Des zones de travail et de manipulation du vin ainsi que des locaux techniques (notamment chaufferie et aussi fabrication de froid), etc. peuvent prendre place dans le même bâtiment ou bien dans un bâtiment voisin.

La plupart du temps, les cuves sont disposées dans un local de forme globale rectangulaire (en vue de dessus). Les cuves sont alors disposées en général en rangées parallèles séparées par des allées dans le local en étant regroupées par tailles.

La cuverie visible sur la page internet « Une signature contemporaine dans les vignes (URL :http://inventaire.aquitaine.fr/batir-vin/signature.htm), montre des cuves disposées sur des cercles avec deux cuves de diamètres différents suivant une direction radiale et un espacement entre les cuves de - deux cercles.

La présente invention a pour but de fournir un cuvier plus ergonomique pour faciliter le travail des cavistes.

Un autre but de la présente invention est d'optimiser la surface du cuvier pour y stocker la plus grande quantité de vin possible par unité de surface.

Avantageusement, un cuvier selon l'invention sera modulable et sa taille pourra aisément être adaptée.

À cet effet, la présente invention propose un cuvier comportant des cuves, notamment des cuves destinées à l'élaboration et/ou au stockage de vin, caractérisé en ce qu'il comporte :
- une zone dite zone centrale,
- au moins deux allées s'étendant selon une disposition radiale depuis la zone centrale,
- au moins un secteur délimité, d'une part, par la zone centrale et, d'autre part, par deux allées voisines,
des cuves de diamètres différents étant disposées à proximité immédiate dans ledit au moins un secteur avec au moins deux cuves disposées l'une à la suite de l'autre selon une direction radiale.

Cette structure originale de cuvier permet une meilleure ergonomie dans l'élaboration de vins. La zone centrale peut être utilisée pour la réalisation de nombreuses opérations nécessaires lors de la fabrication du vin. On a alors un flux convergent vers la zone centrale pour effectuer les différentes tâches d'élaboration du vin en limitant les trajets à la fois des utilisateurs et des fluides transportés (et donc les pertes de charge correspondantes). De même, le fait d'avoir à proximité immédiate, dans un même secteur, des cuves de dimensions différentes permet de faciliter des opérations de transvasement d'une grande cuve vers une cuve plus petite ou inversement.

Pour faciliter l'accès aux cuves, il est avantageux que chaque cuve d'un secteur soit desservie par une allée radiale. Au moins une cuve dans chaque secteur, notamment du côté de la zone centrale, peut aussi être desservie par les deux allées radiales délimitant ledit secteur.

Pour optimiser l'occupation du sol dans le cuvier, il est préférable que deux allées radiales voisines forment entre elles un angle compris entre 10 et 30°, de préférence compris entre 15 et 25°.

De manière classique, chaque cuve du cuvier présente au moins une cheminée. Il est alors avantageusement prévu au moins une passerelle pour permettre un accès à un opérateur à chacune des cheminées des cuves d'un secteur.

Dans un cuvier selon l'invention, la zone centrale présente de préférence une forme globale circulaire.

Pour une bonne répartition des cuves et une optimisation des flux dans le cuvier, ce dernier présente de préférence une paroi extérieure en arc de cercle.

La présente invention concerne également un bâtiment agricole pour une utilisation dans le domaine viticole, caractérisé en ce qu'il comporte un cuvier tel que décrit ci-dessus. Un tel bâtiment peut en outre comporter des locaux techniques et des bureaux. Ces derniers sont avantageusement disposés sur au moins deux niveaux distincts pour une meilleure occupation de la surface au sol et également aussi pour pouvoir optimiser les flux de déplacement de fluides, des personnes et éventuellement d'équipements dans le bâtiment.

Des détails et avantages de la présente invention apparaitront mieux de la description qui suit, faite en référence au dessin schématique annexé sur lequel :
La figure 1 est une vue de principe d'un premier cuvier selon l'invention, correspondant à une cave de relativement petite taille,
Les figures 2 à 5 sont des vues similaires à celle de la figure 1 pour des caves de taille croissante,
La figure 6 est une vue en plan plus détaillée que les figures précédentes d'un premier niveau d'un bâtiment selon l'invention, et
La figure 7 est une vue similaire à la figure 6 pour un second niveau du même bâtiment.

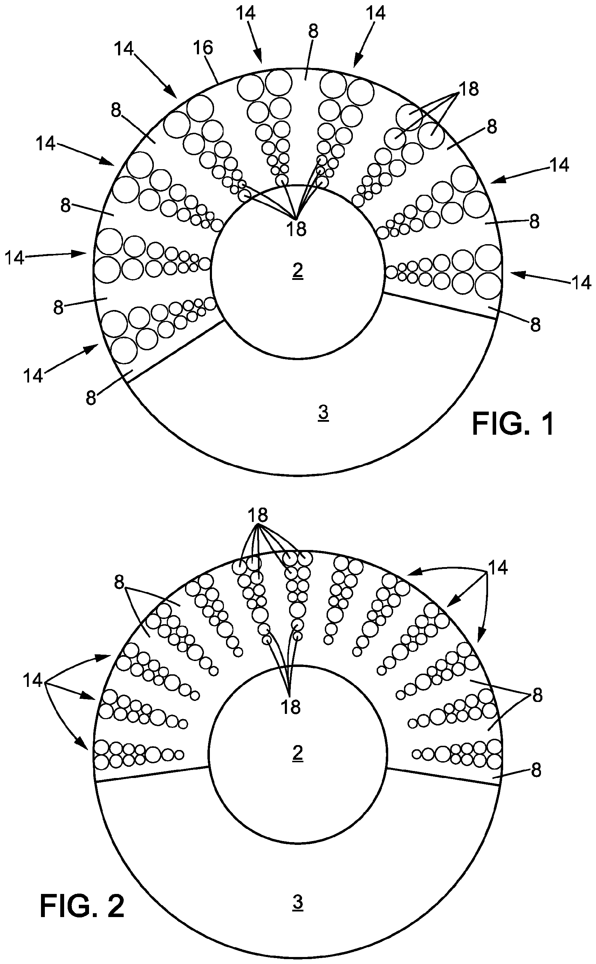

Les figures 1 à 5 illustrent le principe de base de l'invention qui va être décrite ci-après à travers quelques exemples particuliers de réalisation. Ces diverses vues montrent que le principe à la base de la présente invention peut s'appliquer pour plusieurs tailles de cuviers.

Pour les diverses formes de réalisation illustrées, on retrouve pour le cuvier illustré une zone centrale 2 adjacente au cuvier et à d'autres locaux. La zone centrale 2 présente une forme sensiblement circulaire et de par sa position est une zone d'accès au cuvier et à d'autres locaux 3. Elle est aussi une zone de travail destinée à réaliser des opérations de vinification comme par exemple l'assemblage, la clarification, ....

À partir de la zone centrale 2 s'étendent radialement des allées radiales 8. Dans les formes de réalisation illustrées, ces allées radiales 8 s'étendent en éventail depuis la zone centrale 2 sur environ 200° à 250°. Elles sont régulièrement espacées et on dénombre dans ces formes de réalisation de dix à quinze allées radiales 8. On a ainsi des allées radiales 8 qui sont disposées de manière à ce que deux allées voisines forment entre elles un angle de l'ordre de 10 à 30°, de préférence dans les exemples retenus de 15 à 25°. Il est clair que ces données numériques sont données à titre purement illustratif et non limitatif. Les allées pourraient s'étendre sur moins de 200° ou sur plus de 250° et s'étendre jusqu'à 360° et leur nombre est bien entendu variable en fonction, comme décrit après, de la taille des cuves à disposer dans le cuvier, de la taille du cuvier, ....

Entre deux allées radiales 8 voisines se trouve à chaque fois un espace appelé par la suite secteur 14. On trouve ainsi dans les exemples des figures 1 à 5 entre neuf et quatorze secteurs 14. Chaque secteur 14 est ainsi délimité par la zone centrale 2 du côté du centre du bâtiment, par deux allées radiales 8 latéralement et par une paroi extérieure 16 du bâtiment du côté extérieur du bâtiment, à l'opposé de la zone centrale 2. Cette paroi extérieure 16 est en forme de cercle, ou au moins partiellement en forme d'arc de cercle. La forme globale d'un secteur s'approche alors d'un triangle isocèle avec un angle au sommet assez faible, qui peut être inférieur à 20°, par exemple compris entre 10 et 15°. Autrement dit, un secteur 14 est délimité latéralement par un dièdre d'angle au sommet inférieur à 20°, par exemple compris entre 10 et 15°.

Chaque secteur 14 est destiné à recevoir des cuves 18. Dans un même secteur 14, des cuves de différents diamètres et de différentes contenances sont avantageusement prévues. De préférence, dans un même secteur 14, toutes les cuves 18 présenteront sensiblement la même hauteur.

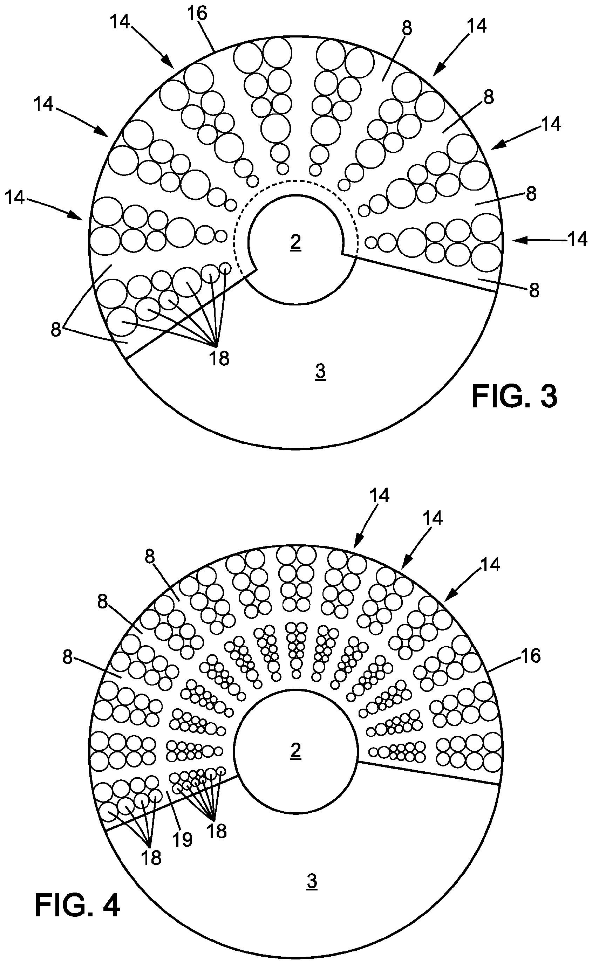

Comme illustré sur le dessin, on vient placer au plus près de la zone centrale 2, pour "remplir" le sommet d'un secteur 14, une cuve 18 de diamètre adapté. Ensuite, à côté de celle-ci, la forme du secteur allant en s'évasant, on peut disposer une cuve 18 de diamètre plus important ou bien deux cuves 18 de diamètre plus petit. Ensuite, les cuves peuvent être disposées deux à deux avec des diamètres croissant en s'éloignant de la zone centrale 2. Les figures 1 à 5 illustrent à titre d'exemples illustratifs mais non limitatifs diverses solutions pour disposer des cuves dans un secteur 14. Dans les diverses formes de réalisation illustrées, chaque cuve 18 d'un secteur 14 est desservie au moins par une allée radiale 8. Toutes les cuves 18 sont alors accessibles par les allées radiales 8. Pour faciliter le passage d'un utilisateur d'une allée radiale à une allée radiale voisine, il est envisageable de créer des passages 19 piéton transversaux ou périphériques (figure 4) reliant deux allées radiales 8 entre elles en passant au milieu de cuves 18. Il n'est ainsi pas nécessaire de repasser par la zone centrale 2 pour rejoindre à partir d'une allée radiale une autre allée radiale. Par contre, il est possible d'optimiser l'utilisation de la surface au sol en évitant d'avoir de tels passages et en disposant bien les cuves les unes à côté des autres.

Le cuvier de la figure 1 est par exemple de relativement petite taille. Sa surface globale est par exemple de l'ordre de 700 m² répartis entre une zone centrale 2 de l'ordre de 100 à 150 m², un cuvier d'environ 350 m², les autres locaux occupant une surface de 150 à 250 m².

Dans un secteur 14, on retrouve ici par exemple des cuves 18 dont le volume est par exemple compris entre 8 et 100 hl (soit entre 0,8 et 10 m³). On a ici par exemple une capacité de stockage d'environ 4.000 hl (soit 400 m³).

La forme de réalisation de la figure 2 correspond par exemple à un cuvier un peu plus grand en surface (environ 1.000 m²) mais avec une capacité de stockage similaire. On a ici un cœur de cave plus important (par exemple entre 200 et 250 m²) de même que des locaux 3 annexes plus grands (environ 400 m²). Dans cette forme de réalisation, la taille des cuves 18 est par exemple comprise entre 15 et 50 hl (1,5 à 5 m³). Dans un secteur 14, du côté de la zone centrale 2, on a tout d'abord trois cuves 18 de tailles croissantes puis deux rangées de quatre cuves 18. En outre, on a privilégié ici d'avoir un relativement grand nombre de secteurs 14 (et donc d'allées radiales 8). Cette forme de cuvier peut par exemple correspondre à une cave réalisant de nombreux types de vins différents.

La forme de réalisation de la figure 3 privilégie la grande capacité de stockage et vise à optimiser l'utilisation de la surface pour le stockage du vin. La zone centrale 2 est de surface relativement restreinte, le nombre d'allés radiales 8 est limité et aucun passage transversal entre deux allées radiales 8 n'est prévu. On a ici par exemple des cuves 18 dont la taille varie de 50 à 400 hl (soit de 5 à 40 m³).

La figure 4 montre une forme de réalisation d'un cuvier de taille plus importante. La surface globale (cuvier avec zone centrale 2 et autres locaux 3) peut être par exemple de plus de 5.000 m². Dans cette configuration, les allées radiales 8 sont relativement longues (plus de 30 m). Comme mentionné précédemment, des passages 19 sont alors prévus pour permettre à un utilisateur de passer d'une allée radiale 8 à une autre sans avoir à repasser par la zone centrale 2.

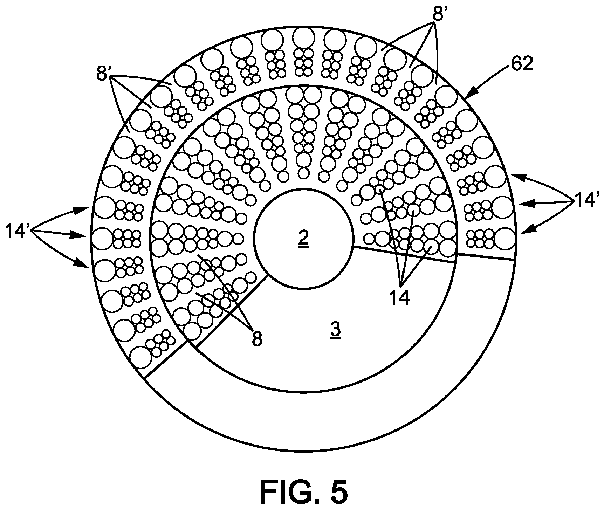

La figure 5 illustre une variante de réalisation. Cette variante peut correspondre soit à un cuvier de grande taille, soit une extension d'un cuvier déjà existant. On reconnait sur cette figure 5, au centre de celle-ci, une zone centrale 2 autour de laquelle se trouvent un cuvier avec ses allées radiales 8 et ses secteurs 14 ainsi que d'autres locaux 3. Dans cette forme de réalisation illustrative et non limitative, il y a treize secteurs 14. Une zone annulaire 62 est disposée à l'extérieur du cuvier "primaire" et ses secteurs 14 pour venir l'agrandir. Elle comporte elle aussi des allées radiales 8' définissant deux par deux des secteurs périphériques 14'. Toutefois, alors que l'angle formé par deux allées radiales 8 est d'environ 18°, l'angle formé par deux allées radiales 8' de la zone annulaire 62 est de l'ordre de 9°. Ainsi, sur un secteur angulaire similaire, la zone annulaire 62 comporte vingt-cinq secteurs périphériques 14' (pour treize secteurs 14). Si nécessaire, il est possible d'agrandir ici également les autres locaux 3 par une zone périphérique annulaire "fermant" la zone annulaire 62.

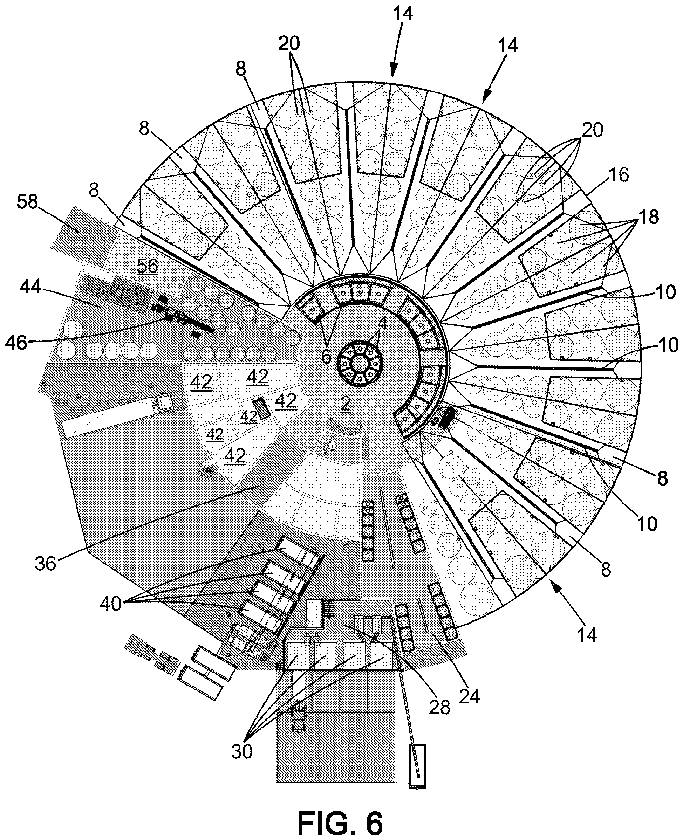

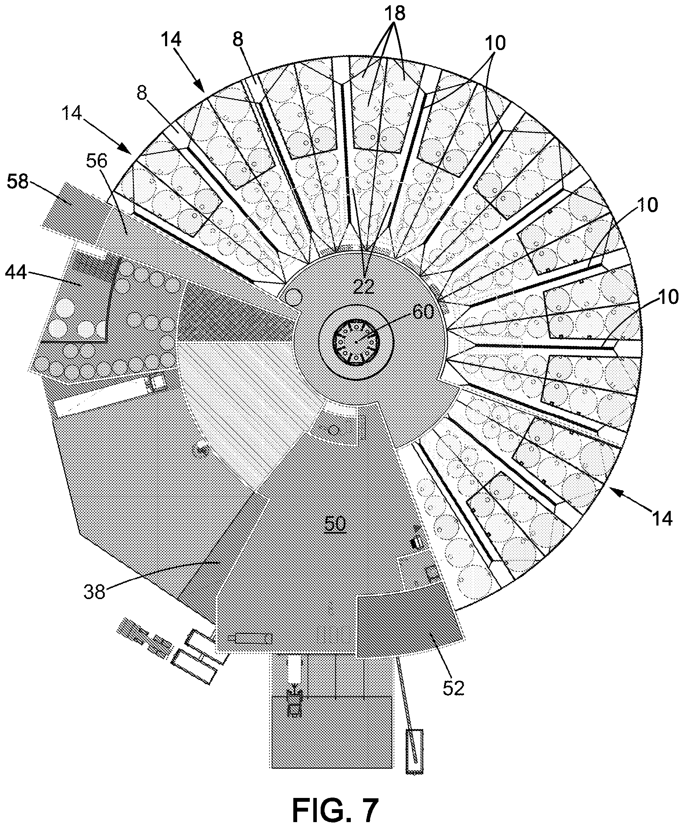

Les figures 6 et 7 montrent un exemple de réalisation plus concret mettant en œuvre le principe constructif illustré sur les figures 1 à 5.

La figure 6 illustre un rez-de-chaussée d'un bâtiment dédié à la fabrication de vin tandis que la figure 7 illustre un niveau supérieur de ce bâtiment. De manière originale, ce bâtiment présente sur une grande partie, une forme circulaire. Cette partie en arc de cercle abrite un cuvier tel que décrit précédemment qui va tout d'abord être décrit ci-après avant de décrire ensuite le reste du bâtiment.

La zone centrale 2 dans ce mode de réalisation concret de l'invention comporte des cuves destinées à être mises en œuvre pour l'élaboration de vins : en son centre des cuves 4 de relativement faible contenance (par exemple moins de 100 hl soit moins de 10 m³) et en périphérie des cuves 6 de taille plus importante (par exemple de 150 à 300 hl, soit de 15 à 30 m³). Au milieu de chaque allée radiale 8 se trouve un caniveau 10 tel qu'on en trouve de manière classique dans une allée de cuvier. Tous les caniveaux 10 convergent vers la zone centrale 2 qui comporte un caniveau périphérique 12 relié à un collecteur de liquides usagés en sous-sol (non illustré).

Comme expliqué plus haut, on retrouve entre deux allées radiales 8 voisines à chaque fois un secteur 14. On trouve ainsi dans l'exemple concret des figures 6 et 7 onze secteurs 14. Chaque secteur 14 est ainsi délimité par la zone centrale 2 du côté du centre du bâtiment, par deux allées radiales 8 latéralement et par la paroi extérieure 16 du bâtiment du côté extérieur du bâtiment, à l'opposé de la zone centrale 2. La forme globale d'un secteur s'approche alors d'un triangle isocèle avec un angle au sommet assez faible, qui est ici d'environ 19°. Autrement dit, un secteur 14 est délimité latéralement par un dièdre d'angle au sommet de l'ordre de 19°.

Chaque secteur 14 reçoit ici aussi des cuves 18. Dans un même secteur 14, des cuves de différents diamètres et de différentes contenances sont avantageusement prévues. De préférence, dans un même secteur 14, toutes les cuves 18 présenteront sensiblement la même hauteur.

Comme illustré sur le dessin, on vient placer au plus près de la zone centrale 2, pour "remplir" le sommet d'un secteur 14, une cuve 18 de relativement petit diamètre. Ensuite, à côté de celle-ci, la forme du secteur allant en s'évasant, on peut disposer une cuve 18 de diamètre plus important puis deux cuves 18 de diamètre plus petit. Ensuite, les cuves peuvent être disposées deux à deux avec des diamètres croissant en s'éloignant de la zone centrale 2. Les cuves 18 d'un secteur 14 sont ici toutes disposées de manière à être disposée le long d'une allée radiale 8. Les deux cuves 18 les plus proches de la zone centrale 2 sont quant à elles disposées chacune le long des deux allées radiales 8 délimitant le secteur 14 considéré. Ainsi chaque cuve 18 d'un secteur 14 est desservie au moins par une allée radiale 8. Toutes les cuves 18 sont alors accessibles par les allées radiales 8.

Entre les deux rangées radiales de cuves 18, se trouve à nouveau au sol un caniveau 10, qui forme une bissectrice par rapport aux caniveaux 10 des allées radiales 8 voisines, et qui s'écoule lui aussi vers le caniveau périphérique 12.

Chaque cuve 18 présente, de manière classique, en partie haute au moins une cheminée 20. Certaines cuves 18 sont des cuves compartimentées. Elles présentent alors une cheminée 20 par compartiment. Pour accéder à ces cheminées 20, des passerelles 22 sont prévues. Ces dernières sont disposées de manière à desservir les diverses cheminées 20. En fonction du nombre de compartiments dans les cuves 18, de la taille des cuves 18 et de leurs compartiments, les passerelles 22 seront par exemple disposées à deux ou trois altitudes distinctes depuis le sol du cuvier.

Le bâtiment illustré comporte outre le cuvier divers locaux qui vont être décrits ci-après. Il y a des locaux pour de la logistique, d'autres techniques, et d'autres administratifs et/ou commerciaux.

De manière préférée, les locaux autres que le cuvier sont de préférence également organisés radialement à partir de la zone centrale 2. Ainsi, il est prévu par exemple d'avoir des parois en arc de cercle. Typiquement un local sera délimité par deux parois en arcs de cercle concentriques et deux parois radiales.

Le plan donné sur le dessin est purement illustratif et a simplement pour but de donner un exemple d'aménagement.

On retrouve à côté du cuvier, à droite sur la figure 1, un premier local 24 dans lequel sont disposées des cuves en béton 26 qui sont utilisées pour des vinifications particulières.

Du côté extérieur du bâtiment se trouvent à côté du local avec les cuves en béton 26 des quais 28 avec des conquets 30 destinés à recevoir la vendange juste après sa récolte.

Du côté intérieur du bâtiment, se trouvent à côté du local avec les cuves en béton 26 divers locaux techniques 32 comme par exemple un local de rangement, un local pour loger les armoires électriques, un local pour des équipements électriques tels un transformateur, un collecteur électrique pour panneaux photovoltaïques, ....

Dans la zone centrale 2, à côté de ces locaux techniques 32, se trouve un local dans lequel est placée par exemple une centrifugeuse 34.

À côté des locaux techniques 32 et du local avec la centrifugeuse 34, se trouve un couloir 36 permettant l'accès direct depuis l'extérieur du bâtiment à la zone centrale 2. À l'extérieur, à côté à la fois des quais 28 et des locaux techniques 32 se trouve un emplacement protégé par un auvent 38 et destiné à accueillir des bennes 40.

De l'autre côté du couloir 36 se trouvent d'autres locaux 42 tels un atelier, des pièces de rangement pour des produits œnologiques, des produits d'entretien, un vestiaire, des sanitaires, une salle de repos et/ou un coin repas, etc..

Entre ces locaux et le cuvier, se trouve un espace de stockage 44 de produits finis dans lequel se trouve par exemple aussi une unité de mise en bouteilles 46. À l'extérieur de cet espace de stockage 44, il est prévu un autre auvent 48 pour permettre le chargement de camions au sec.

Enfin, on remarque le long du cuvier la présence d'une cage d'escalier 56 qui permet d'accéder au niveau supérieur illustré sur la figure 2. À l'extérieur, un auvent 58 est prévu pour protéger les visiteurs qui se présentent devant le bâtiment.

Les cuves 18 étant de relativement grande hauteur, il est possible de prévoir d'autres locaux à un niveau supérieur par rapport au rez-de-chaussée qui vient d'être décrit. Ici, la gestion de l'espace est libre et de nombreuses variantes de réalisation sont envisageables. Il peut être envisagé d'optimiser l'espace et de mettre un second niveau au-dessus de tout le rez-de-chaussée ou bien d'aménager des espaces en mezzanine. À ce titre, la figure 2 est uniquement un exemple non limitatif d'aménagement. Cette figure a pour but d'illustrer une manière à la fois efficace et faisant preuve d'un souci esthétique pour aménager le bâtiment décrit.

Ainsi, au niveau supérieur illustré sur la figure 2, on prévoit de placer au-dessus du local contenant les cuves en béton 26 et partiellement au-dessus des quais 28 un local dit local thermique 50 pour la production de chaud et de froid. Une terrasse 52 est associée à ce local thermique pour des machines thermodynamiques (pompes à chaleur, production de froid).

Il est proposé dans le bâtiment présenté ici de réaliser les opérations d'extraction et de pressurage au niveau supérieur dans un espace de pressurage 54. Ce dernier est placé par exemple au-dessus partiellement des quais 28 qui sont destinés à accueillir la vendange et de l'espace recevant les bennes 40. Les dispositifs de pressurage et d'extraction sont donc directement à proximité du lieu de livraison de la vendange.

Au-dessus des locaux 42 et du couloir 36, un espace peut être aménagé en bureaux, en espace de vente, mezzanine avec vue sur l'extérieur et/ou sur le cuvier, .... On retrouve sur la figure 2 la cage d'escalier 56 et l'auvent 58 décrit en référence à la figure 1.

Dans la forme de réalisation illustrée au dessin, l'escalier de la cage d'escalier 56 débouche au-dessus de la zone centrale 2 qui est recouverte par une plateforme utilisée pour servir d'accès aux locaux se trouvant au niveau supérieur et pour faire des bureaux et/ou salle de réunion. Un puits de lumière 60 est avantageusement prévu au centre de la zone centrale 2 pour éclairer cette dernière et les pièces réalisées sur la plateforme recouvrant cette zone centrale 2.

Un cuvier tel que décrit ici permet d'augmenter l'ergonomie pour la fabrication du vin. La zone centrale 2 est de préférence une zone de travail, au cœur du cuvier, où peuvent se réaliser la plupart des opérations effectuées lors de l'élevage du vin : clarification, assemblage, ....

Bien que de forme circulaire, ce cuvier ne présente que des allées droites. La construction de ce cuvier, notamment pour ses fondations et ses structures en béton sous les cuves, ne présente pas de difficulté particulière. En outre, la grande majorité des passerelles et des caniveaux sont également droits.

La forme circulaire avec une zone centrale permet de limiter les trajets pour les déplacements de liquides et autres fluides et produits. Le fait d'avoir des cuves de tailles différentes dans un même secteur est également très intéressant de ce point de vue-là. Comme indiqué au préambule, dans un cuvier "classique", les cuves sont le plus souvent rangées en fonction de leur taille. Quand il convient de vider le reste d'une grande cuve dans une petite cuve ou bien au contraire quand deux ou trois petites cuves viennent en remplir une grande, il peut être nécessaire de faire traverser au liquide tout le cuvier. Ici, ces opérations de changements de cuves peuvent être faites entre cuves quasi voisines.

La forme circulaire proposée permet aussi un excellent accès au cuvier et au bâtiment correspondant. Comme illustré sur le dessin, la forme circulaire permet de faciliter l'accès de véhicules au plus près des zones de travail en limitant ainsi les manutentions.

Le bâtiment proposé, et notamment le cuvier, est d'une grande modularité. La conception en secteurs permet d'agrandir chaque atelier de l'unité de production sans avoir à changer la structure de l'ensemble. Les secteurs du cuvier peuvent être agrandis vers l'extérieur mais aussi les divers locaux techniques, administratifs et commerciaux.

La présente invention ne se limite pas à la forme de réalisation décrite ci-dessus à titre d'exemple non limitatif et illustrée au dessin et aux variantes évoquées mais elle concerne également toute variante de réalisation à la portée de l'homme du métier dans le cadre des revendications ci-après.

## Revendications

1. Cuvier comportant des cuves (18), notamment des cuves destinées à l'élaboration et/ou stockage de vin, **caractérisé en ce qu'**il comporte :
- une zone dite zone centrale (2),
- au moins deux allées (8) s'étendant selon une disposition radiale depuis la zone centrale (2),
- au moins un secteur (14) délimité, d'une part, par la zone centrale (2) et, d'autre part, par deux allées (8) voisines,
des cuves (18) de diamètres différents étant disposées à proximité immédiate dans ledit au moins un secteur (14), avec au moins deux cuves disposées l'une à la suite de l'autre selon une direction radiale.

2. Cuvier selon la revendication 1, **caractérisé en ce que** chaque cuve (18) d'un secteur est desservie par une allée radiale.

3. Cuvier selon l'une des revendications 1 ou 2, **caractérisé en ce qu'**au moins une cuve (18) dans chaque secteur (14) est desservie par les deux allées radiales (8) délimitant ledit secteur (14).

4. Cuvier selon l'une des revendications 1 à 3, **caractérisé en ce que** deux allées radiales (8) voisines forment entre elles un angle compris entre 10 et 30°, de préférence entre 15 et 25°.

5. Cuvier selon l'une des revendications 1 à 4, **caractérisé en ce que** chaque cuve (18) présente au moins une cheminée (20), et **en ce qu'**au moins une passerelle (22) est prévue pour permettre un accès à un opérateur à chacune des cheminées (20) des cuves (18) d'un secteur (14).

6. Cuvier selon l'une des revendications 1 à 5, **caractérisé en ce que** la zone centrale (2) présente une forme globale circulaire.

7. Cuvier selon l'une des revendications 1 à 6, **caractérisé en ce qu'**il présente une paroi extérieure (16) en arc de cercle.

8. Bâtiment agricole pour une utilisation dans le domaine viticole, **caractérisé en ce qu'**il comporte un cuvier selon l'une des revendications 1 à 7.

9. Bâtiment selon la revendication 8, **caractérisé en ce qu'**il comporte en outre des locaux techniques et des bureaux.

10. Bâtiment selon la revendication 9, **caractérisé en ce que** les locaux techniques et/ou les bureaux sont disposés sur au moins deux niveaux distincts.

## Patentansprüche

1. Gärkeller, umfassend Fässer (18), insbesondere Fässer, die zur Herstellung und/oder Lagerung von Wein bestimmt sind, **dadurch gekennzeichnet, dass** er Folgendes umfasst:
- einen Bereich, genannt mittlerer Bereich (2),
- wenigstens zwei Gänge (8), die sich in einer radialen Anordnung ausgehend von dem mittleren Bereich (2) erstrecken,
- wenigstens einen Sektor (14), der einerseits von dem mittleren Bereich (2) und andererseits von zwei benachbarten Gängen (8) begrenzt wird,
wobei Fässer (18) mit unterschiedlichen Durchmessern in unmittelbarer Nähe in dem wenigstens einen Sektor (14) angeordnet sind, wobei wenigstens zwei Fässer hintereinander in einer radialen Richtung angeordnet sind.

2. Gärkeller nach Anspruch 1, **dadurch gekennzeichnet, dass** jedes Fass (18) eines Sektors (14) von einem radialen Gang bedient wird.

3. Gärkeller nach einem der Ansprüche 1 oder 2, **dadurch gekennzeichnet, dass** wenigstens ein Fass (18) in jedem Sektor (14) von den zwei radialen Gängen (8) bedient wird, die den Sektor (14) begrenzen.

4. Gärkeller nach einem der Ansprüche 1 bis 3, **dadurch gekennzeichnet, dass** zwei benachbarte radiale Gänge (8) zwischen ihnen einen Winkel zwischen 10 und 30°, vorzugsweise zwischen 15 und 25°, bilden.

5. Gärkeller nach einem der Ansprüche 1 bis 4, **dadurch gekennzeichnet, dass** jedes Fass (18) wenigstens einen Kamin (20) aufweist und dass wenigstens eine Brücke (22) vorgesehen ist, um einer Bedienungsperson den Zugang zu jedem der Kamine (20) der Fässer (18) eines Sektors (14) zu ermöglichen.

6. Gärkeller nach einem der Ansprüche 1 bis 5, **dadurch gekennzeichnet, dass** der mittlere Bereich (2) eine kreisförmige Gesamtform aufweist.

7. Gärkeller nach einem der Ansprüche 1 bis 6, **dadurch gekennzeichnet, dass** er eine kreisbogenförmige Außenwand (16) aufweist.

8. Landwirtschaftliches Gebäude für eine Verwendung im Bereich des Weinbaus, **dadurch gekennzeichnet, dass** es einen Gärkeller nach einem der Ansprüche 1 bis 7 umfasst.

9. Gebäude nach Anspruch 8, **dadurch gekennzeichnet, dass** es ferner Technikräume und Büros umfasst.

10. Gebäude nach Anspruch 9, **dadurch gekennzeichnet, dass** die Technikräume und/oder die Büros in wenigstens zwei unterschiedlichen Geschossen angeordnet sind.

## Claims

1. A vat room including vats (18), in particular vats intended for the production and/or storage of wine, **characterised in that** it includes:
- an area called the central area (2),
- at least two aisles (8) extending in a radial disposition from the central area (2),
- at least one sector (14) delimited, on the one hand, by the central area (2) and, on the other hand, by two neighbouring aisles (8),
vats (18) of different diameters being disposed in close proximity in said at least one sector (14), with at least two vats disposed one after the other in a radial direction.

2. The vat room according to claim 1, **characterised in that** each vat (18) of one sector is served by a radial aisle.

3. The vat room according to one of claims 1 or 2, **characterised in that** at least one vat (18) in each sector (14) is served by the two radial aisles (8) delimiting said sector (14).

4. The vat room according to one of claims 1 to 3, **characterised in that** two neighbouring radial aisles (8) form therebetween an angle comprised between 10 and 30°, preferably between 15 and 25°.

5. The vat room according to one of claims 1 to 4, **characterised in that** each vat (18) has at least one chimney (20), and **in that** at least one footbridge (22) is provided to allow access to an operator to each of the chimneys (20) of the vats (18) of one sector (14).

6. The vat room according to one of claims 1 to 5, **characterised in that** the central area (2) has an overall circular shape.

7. The vat room according to one of claims 1 to 6, **characterised in that** it has a circular arc-like outer wall (16).

8. An agricultural building for use in the wine field, **characterised in that** it includes a vat room according to one of claims 1 to 7.

9. The building according to claim 8, **characterised in that** it further includes technical premises and offices.

10. The building according to claim 9, **characterised in that** the technical premises and/or the offices are disposed over at least two separate levels.
